# FASCICULE DE BREVET EUROPEEN

(11) **EP 1 654 204 B1**
(45) Date de publication et mention de la délivrance du brevet: **04.03.2009**
(21) Numéro de dépôt: 04786271.9
(22) Date de dépôt: 06.08.2004
(51) Int. Cl.: C04B 22/06

(54) **SUSPENSION AQUEUSE COLLOIDALE D'HYDROXYDE D'AU MOINS UN ELEMENT DE TRANSITION, DESTINEE A LA REDUCTION DE CHROME DANS LE CIMENT**
KOLLOIDALE WÄSSRIGE HYDROXIDSUSPENSION MINDESTENS EINES ÜBERGANGSELEMENTS, DIE ZUR REDUKTION VON CHROM IN ZEMENT DIENT
COLLOIDAL HYDROXIDE AQUEOUS SUSPENSION OF AT LEAST ONE TRANSITION ELEMENT SERVING TO REDUCE CHROME IN CEMENT

(30) Priorité: 08.08.2003 FR 0309755
(43) Date de publication de la demande: 10.05.2006
(73) Titulaire: Chryso, 92440 Issy-Les-Moulineaux (FR)
(72) Inventeur: PEREZ, Jean-Philippe, F-45000 Orleans (FR); MALBAULT, Olivier, F-91820 Boutigny sur Essonne (FR); MOSQUET, Martin, F- 38300 Bourgoin-Jallieu (FR)
(74) Mandataire: Colombet, Alain André
(86) Numéro de dépôt international: PCT/FR2004/002098
(87) Numéro de publication internationale: WO 2005/016843

(56) Documents cités:
- EP-A- 0 960 865
- EP-A- 1 251 111
- WO-A-00/06517
- WO-A-91/15435
- WO-A-96/40598
- WO-A-98/24734
- DE-U1- 29 915 326
- US-A- 4 019 994
- US-A- 4 148 131
- US-A- 6 133 347
- PATENT ABSTRACTS OF JAPAN vol. 0183, no. 71 (C-1224), 13 juillet 1994 (1994-07-13) & JP 06 100343 A (NIPPON SOLID CO LTD), 12 avril 1994 (1994-04-12)

## Description

L'invention concerne une suspension aqueuse d'hydroxyde d'étain ayant un potentiel d'oxydo-réduction de -0.96 V, d'hydroxyde de fer ayant un potentiel d'oxydo-réduction de - 0.56 V, d'hydroxyde de manganèse ayant un potentiel d'oxydoréduction de -0.4 V, mis en oeuvre seul ou en mélange, ayant un pH compris entre 2 et 11, bornes exclues, destinée à réduire la teneur de chrome VI du ciment à une valeur au plus égale à 2 ppm, suspension qui est stabilisée au moyen d'un agent de stabilisation.

L'invention concerne aussi l'utilisation de suspensions aqueuses d'hydroxyde d'étain, et/ou d'hydroxyde de fer et/ou d'hydroxyde de manganèse de pH compris entre 2 et 11, bornes exclues, destinées à réduire la teneur de chrome VI du ciment lors du procédé de préparation du ciment pour former un ciment traité dont la teneur en chrome VI a une valeur au plus égale à 2 ppm.

L'invention concerne enfin un procédé de traitement des ciments pour réduire la teneur en chrome VI du ciment à une valeur au plus égale à 2 ppm.

Il est connu que les ciments contiennent des composés de chrome qui, lorsque les ciments sont mélangés avec de l'eau, se présentent sous la forme de chrome VI dissous dans l'eau. Or, le chrome VI soluble dans l'eau des ciments peut être à l'origine de de réactions allergiques pour les personnes qui sont en contact avec des produits contenant des composés hydrosolubles de chrome hexavalents. Le chrome est même suspecté cancérogène pour l'homme. Ainsi, les travailleurs du domaine de la construction amenés à avoir la peau, en général les mains et les bras, en contact régulier avec des mélanges de ciment et d'eau peuvent être susceptibles de contracter un eczéma de contact dû à la teneur trop élevée en chrome VI des ciments.

Il existe dans l'état de la technique des systèmes destinés à réduire les composés hydrosolubles de chrome hexavalents dans les ciments. Il est connu par exemple que l'addition de sulfate ferreux réduit la teneur en chrome dissous dans un mélange ciment-eau. Le sulfate ferreux peut être par exemple ajouté pendant la préparation de mélanges contenant du ciment ou pendant la fabrication du ciment. Le sulfate de fer (II) réduit le Cr⁶⁺ en Cr³⁺ qui a une faible solubilité dans les mélanges ciment-eau. Ainsi, la réaction entre les ions Fe²⁺ et Cr⁶⁺ a lieu en milieu aqueux, c'est-à-dire lorsque l'eau est ajoutée au ciment contenant du sulfate de fer (II).

Depuis les années 1970, le cimentier effectue un traitement au sulfate ferreux notamment lors de l'étape de broyage afin de réduire la teneur en chrome VI dans les ciments et combattre ainsi les risques d'eczéma pouvant être contracté par les travailleurs du domaine de la construction en contact régulier avec des mélanges de ciment-eau. Toutefois, ce traitement au sulfate ferreux des ciments permettant de réduire la teneur en chrome VI des ciments traités s'avère peu efficace et présente de nombreux inconvénients.

En effet, il s'avère nécessaire dans la pratique d'utiliser du sulfate de fer sous forme de poudre afin d'obtenir une réduction du chrome (VI) en Chrome (III) avec des ions de fer (II). Or, l'oxygène de l'air peut convertir le fer (II) en fer (III). De ce fait, une attention particulière ainsi que des conditions particulières de mises en oeuvre se révèlent indispensables.

D'autres voies de réduction du chrome (VI) ont été développées, comme par exemple la réduction du chrome (VI) par des systèmes organiques tels que des aldéhydes, des composés hétérocycliques tels que, par exemple, la pyridine. Mais l'utilisation de ces systèmes organiques dans la pratique s'est révélée inadaptée pour des raisons économiques liées notamment à la faible stabilité de ces systèmes organiques dans les préparations de ciment ou encore aux quantités à utiliser. Il est par ailleurs connu dans l'état de la technique qu'une solution d'ions solubles Sn²⁺ permet de réduire le Chrome VI.

La demande de brevet WO 91/15435 décrit un procédé pour la réduction de Cr⁶⁺ utilisant un sel de manganèse en forme d'hydroxyde en combinaison avec un sulfonate de naphtalène, en solution concentrée ou en poudre.

Il n'existe donc pas dans l'état de la technique de suspension aqueuse à base d'hydroxyde d'étain, de pH compris entre 2 et 11, bornes exclues, capable de réduire la teneur en chrome VI du ciment, remplissant cumulativement les conditions suivantes :
- une grande stabilité, même en suspension concentrée,
- une viscosité des suspensions constante dans le temps et qui reste faible,
- une viscosité en solution concentrée suffisamment faible de façon à faciliter leur emploi,
- un conditionnement à un pH compris entre 2 et 11, bornes exclues, pour faciliter les stockages, les transports et les conditions de mise en oeuvre.

De façon surprenante, il a été trouvé qu'une suspension aqueuse d'hydroxyde d'au moins un élément de transition, en particulier d'hydroxyde d'étain et/ou d'hydroxyde de fer et/ou d'hydroxyde de manganèse ayant un pH compris entre 2 et 11, bornes exclues, réduit la teneur en chrome VI du ciment à une valeur au plus égale à 2ppm et se caractérise en ce qu'elle comprend de 0,5 à 80% en poids de matière sèche d'hydroxyde d'au moins un élément de transition, en particulier d'hydroxyde d'étain, et/ou d'hydroxyde de fer et/ou d'hydroxyde de manganèse par rapport à la quantité d'eau, hydroxyde mis en oeuvre seul ou en mélange et en ce qu'elle est stabilisée par un agent de stabilisation hydrosoluble. Dès lors, la présente invention a aussi pour objet l'utilisation de ces suspensions aqueuses d'hydroxyde d'étain, et/ou d'hydroxyde de fer et/ou d'hydroxyde de manganèse de pH compris entre 2 et 11, bornes exclues, destinées à réduire la teneur de chrome VI du ciment pour produire des ciments dont la teneur en chrome VI est au plus égale à 2 ppm, appelés ci-après ciments traités.

La présente invention a également pour objet un procédé de traitement des ciments pour réduire la teneur de chrome VI du ciment à une valeur au plus égale à 2 ppm, qui est caractérisé en ce qu'on introduit après l'étape de calcination du clinker dans le procédé de fabrication du ciment, une suspension aqueuse d'hydroxyde d'étain, et/ou d'hydroxyde de fer et/ou d'hydroxyde de manganèse ayant un pH compris entre 2 et 11, bornes exclues, suspension telle que définie précédemment, selon l'invention pour fabriquer des ciments dont la teneur en chrome VI est au plus égale à 2 ppm, appelés ci-après ciments traités.

Il est également décrit l'utilisation de ciment traité obtenu selon le procédé de traitement de l'invention et dont la teneur en chrome VI est au plus égale à 2 ppm pour préparer une composition de béton comprenant du ciment traité, de l'eau et les composants usuels.

Il est enfin décrit des compositions de bétons comprenant du ciment, de l'eau et les composants usuels et étant caractérisées en ce que l'on ajoute au moment du mélange des différents composants une suspension aqueuse d'hydroxyde d'étain de pH compris entre 2 et 11, bornes exclues, telle que définie dans le cadre de l'invention en quantité suffisante pour réduire la teneur de chrome VI soluble à une valeur au plus égale à 2 mg de Cr(VI) par kg de ciment.

Les chromes présentent la caractéristique d'avoir une forte action oxydante. Ainsi, en présence de substances oxydables, le chrome (VI) est réduit en chrome (III). La réaction chimique d'oxydoréduction qui décrit ce mécanisme se définit comme le transfert d'électrons entre la forme réduite red₂ d'un couple redox (ox₂/red₂) vers la forme oxydée ox₁ d'un autre couple redox (ox₁/red₁). Elle ne peut avoir lieu que si le potentiel d'oxydoréduction du couple ox_{1/}red₁ est supérieur au potentiel d'oxydoréduction du couple ox₂/red₂.

Lorsque les couples sont classés sur une échelle de potentiel redox, ce transfert obéît à une loi dite loi du gamma (figure 2).

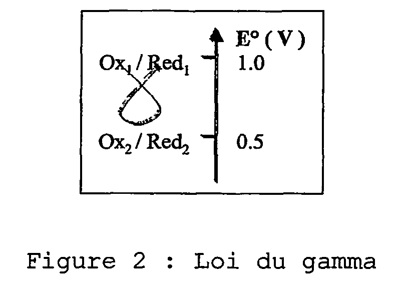

Il convient alors dans le cadre de l'invention de sélectionner les couples redox mis en jeu dans le cas de la réduction du chrome VI dans le ciment. Pour ce faire, il apparaît nécessaire de déterminer sous quelle forme ionique le chrome est présent dans le milieu interstitiel du ciment pour pouvoir sélectionner les couples susceptibles de réduire le Chrome dans le milieu intersticiel du ciment.

Ce milieu interstitiel du ciment présente un pH fortement basique supérieur à 11 et dans un tel milieu, le chrome VI est présent sous la forme CrO₄²⁻.

Dès lors, le couple d'oxydo-réduction mis en jeu apparaît être CrO₄²⁻/ Cr(OH)₃ et l'équation de réduction associée à ce couple est:

CrO₄²⁻, + 4 H₂O + 3e⁻ → Cr (OH)₃ + 5 OH⁻ (équation 1)

Le potentiel d'oxydo-réduction vérifié du couple CrO₄²⁻/ Cr(OH)₃.est de -0.12 V et une réaction d'oxydo-réduction avec un autre couple ox/red ne peut avoir lieu que si cet autre couple ox/red présente un potentiel d'oxydo-réduction inférieur à -0.12V.

Selon l'invention, dans le cas de l'hydroxyde d'étain sélectionné, le couple Sn(OH)₆²⁻/ Sn(OH)₄²⁻. possède un potentiel d'oxydoréduction mesuré de -0.96 V inférieur à celui du couple CrO₄²⁻/Cr(OH)₃ qui est de -0. 12 V.

Dès lors, le couple ox/red sélectionné répond aux équations d'oxydo-réduction suivantes et le transfert correspondant d'électrons s'opèrent selon la loi gamma précitée (figure 3):

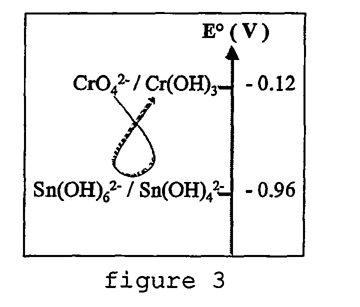

CrO₄²⁻ + 4 H₂O + 3e⁻ → Cr(OH)₃ + 5 OH⁻ équation 2

Sn(OH)₆²⁻ + 2e⁻ → Sn(OH)₄²⁻ + 2 OH⁻ équation 3

Lors de l'application du couple ox/red, sélectionné dans le milieu interstitiel du ciment, l'hydroxyde d'étain Sn(OH)₂ réagit avec les ions hydroxydes du milieu pour former l'ion Sn(OH)₄²⁻ selon l'équation 4.

Sn(OH)₂ + 2OH⁻ → Sn(OH)₄²⁻ équation 4

L'ion Sn(OH)₄²⁻ est la forme réduite du couple Sn(OH)₆²⁻ / Sn (OH) ₄²⁻. Ce couple ox/red possède un potentiel de -0.96 V

Selon la loi du gamma pour les couples CrO₄²⁻ / Cr(OH) ₃ et Sn (OH) ₆²⁻/ Sn(OH)₄²⁻ (figure 3), Sn(OH)₄²⁻ réduit l'ion CrO₄²⁻ en Cr(OH)₃ selon la réaction d'oxydo-réduction suivante (équation 5).

2 CrO₄²⁻ + 8 H₂O + 3 Sn(OH)₄²⁻ → 2 Cr(OH)₃ + 4 OH⁻ + 3 Sn(OH)₆²⁻ équation 5

A l'opposé et comme le montre la figure 3 de la loi du gamma pour le couple CrO₄²⁻/ Cr(OH)₃ (-0.12V), la mise en oeuvre d'un couple Sn⁴⁺ /Sn²⁺ de potentiel d'oxydo-réduction égal à + 0.15 V, apparaît ne pas pouvoir être utilisé comme réducteur du Chrome VI dans le milieu intersticiel du ciment : ce couple a en effet un potentiel d'oxydo-réduction supérieur à celui du couple CrO₄²⁻/ Cr(OH)₃ dans l'échelle des potentiels d'oxydo-réduction et dès lors, la réaction d'oxydo-réduction entre Sn²⁺ et Cro₄²-, espèce présente dans ledit milieu intersticiel du ciment, ne peut avoir lieu comme le révèle la figure 4 ci-après.

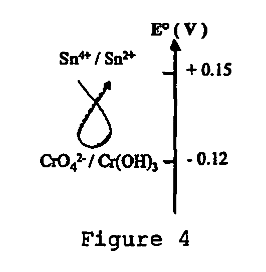

Dans le cas de l'hydroxyde de fer sélectionné, le couple Fe (OH) ₃/ Fe (OH) ₂. possède un potentiel d'oxydo-réduction mesuré de -0.56 V inférieur à celui du couple CrO₄²⁻/ Cr (OH)₃ qui est de -0.12 V.

Dès lors, les équations d'oxydo-réduction sont les suivantes et le transfert correspondant d'électrons s'opèrent selon la loi de gamma (figure 5) suivante:

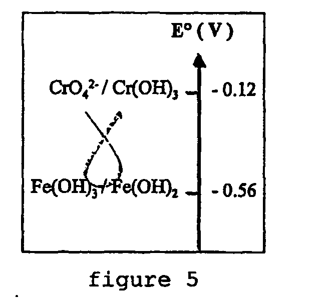

CrO₄²- + 4 H₂O + 3e⁻ → Cr(OH)₃ + 5 OH⁻ équation 6

Fe(OH)₃ + e⁻ → Fe(OH)₂ + OH⁻ équation 7

Lors de l'application du couple ox/red sélectionné, dans le milieu intersticiel du ciment, le couple Fe (OH) ₃/Fe (OH)₂, réduit l'ion CrO₄²⁻ en Cr (OH)₃, selon la réaction d'oxydo réduction décrite ci-après (équation 8).

CrO₄²⁻ + 4 H₂O + 3 Fe(OH)₂ → Cr(OH)₃ + 2 OH⁻ + 3 Fe(OH)₃ équation 8

Dans le cas de l'hydroxyde de manganèse sélectionné, le couple Mn(OH)₃/Mn (OH)₂.possède un potentiel d'oxydo-réduction mesuré de -0.40 V inférieur à celui du couple CrO₄²⁻/ Cr(OH)₃ qui est égal à -0.12 V.

Dès lors, les équations d'oxydo-réduction sont les suivantes et le transfert correrspondant d'électrons s'opèrent selon la loi de gamma (figure 6) :

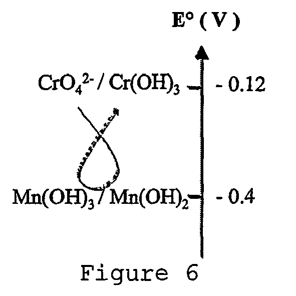

CrO₄²⁻ + 4 H₂O + 3e⁻ → Cr(OH)₃ + 5 OH⁻ équation 9

Mn(OH)₃ + e⁻ Mn(OH)₂ + OH⁻ → équation 10

Lors de l'application du couple red/ox sélectionné dans le milieu intersticiel du ciment, l'hydroxyde de manganèse Mn(OH)₃/ Mn(OH)₂ réduit l'ion CrO₄²- en Cr(OH)₃ selon la réaction d'oxydo-réduction suivante (équation 11).

CrO₄²⁻ + 4 H₂O + 3 Mn(OH)₂ → Cr ( OH)₃ + 2 OH⁻ + 3 Fe(OH)₃ équation 11

Ainsi, la suspension aqueuse d'hydroxyde d'étain et/ou d'hydroxyde de fer et/ou d'hydroxyde de manganèse de pH compris entre 2 et 11, bornes exclues, selon l'invention est préparée à partir respectivement de composé stanneux, ou de composé ferreux, ou de composé manganeux en présence d'une base forte. Pour ce faire, on peut préparer une suspension d'hydroxyde d'étain de pH compris entre 2 et 11, bornes exclues, à partir d'un composé stanneux de l'hydroxyde de sodium. Parmi les composés stanneux, on peut citer à titre d'exemple, les chlorures d'étain, les sulfates d'étain et les autres composés stanneux couramment utilisés et facilement dissociés en milieu aqueux.

De même, on peut préparer une suspension d'hydroxyde de fer de pH compris entre 2 et 11, bornes exclues, à partir d'un composé ferreux de l'hydroxyde de sodium.

Parmi les composés ferreux, on peut citer à titre d'exemple, les chlorures de fer, les sulfates de fer et les autres composés ferreux couramment utilisés et facilement dissociés en milieu aqueux.

Enfin, on peut préparer une suspension d'hydroxyde de manganèse de pH compris entre 2 et 11, bornes exclues, à partir d'un composé manganeux de l'hydroxyde de sodium. Parmi les composés manganeux, on peut citer à titre d'exemple, les chlorures de manganèse, les sulfates de manganèse et les autres composés ferreux couramment utilisés et facilement dissociés en milieu aqueux.

La suspension aqueuse d'hydroxyde d'étain, et/ou d'hydroxyde de fer et/ou d'hydroxyde de manganèse de pH compris entre 2 et 11, bornes exclues, ainsi obtenue se présente sous la forme d'une suspension colloïdale qui tend à sédimenter. C'est pourquoi une homogénéisation par la stabilisation de la suspension aqueuse colloïdale d'hydroxyde d'étain, et/ou d'hydroxyde de fer et/ou d'hydroxyde de manganèse de pH compris entre 2 et 11, bornes exclues, est pratiquée par la mise en oeuvre d'un agent de stabilisation hydrosoluble. Cet agent de stabilisation de ladite suspension se révèle indispensable pour obtenir une suspension aqueuse d'hydroxyde d'étain, et/ou d'hydroxyde de fer et/ou d'hydroxyde de manganèse, de pH compris entre 2 et 11, bornes exclues, destinée à réduire la teneur en chrome VI du ciment à une valeur au plus égale à 2 ppm, comprenant de 0,5 à 80% en poids de matière sèche d'hydroxyde d'étain, et/ou d'hydroxyde de fer et/ou d'hydroxyde de manganèse par rapport à la quantité d'eau, pour que ladite suspension aqueuse soit utilisable à l'échelle industrielle.

Une suspension aqueuse d'hydroxyde d'étain,et/ou d'hydroxyde de fer et/ou d'hydroxyde de manganèse peut comprendre préférentiellement de 5 à 70% en poids de matière sèche d'hydroxyde d'étain, et/ou d'hydroxyde de fer et/ou d'hydroxyde de manganèse rapporté à la quantité d'eau, et plus préférentiellement de 10 à 60% en poids de matière sèche d'hydroxyde d'étain, et/ou d'hydroxyde de fer et/ou d'hydroxyde de manganèse rapporté à la quantité d'eau.

Comme précisé précédemment, la suspension selon l'invention est stabilisée par un agent de stabilisation hydrosoluble.

Par agent hydrosoluble de stabilisation, on entend dans le présent exposé un agent dispersant hydrosoluble de masse molaire inférieure à 100 000 g/mol.

Selon l'invention, l'agent hydrosoluble qui est un agent dispersant, est choisi préférentiellement parmi les polynaphtalène sulfonates, les polyoxyalkylène phosphonates, préférentiellement di-phosphonates et les polycarboxylates polyoxyalkylène de masse molaire inférieure à 100 000 g/mol.

Au titre des polycarboxylates polyoxyalkylène définis comme agents dispersants selon l'invention, on peut citer par exemple, les copolymères de type polycarboxylique obtenus par polymérisation d'un monomère de monoester de polyalkylèneglycol contenant de 2 à 300 molécules d'oxyalkylène avec au moins un monomère choisi parmi les acides monocarboxyliques insaturés tels que l'acide acrylique, l'acide méthacrylique, et les acides dicarboxyliques insaturés, tel que l'anhydride maléique. A titre d'exemples, on peut citer les copolymères (méth)acrylate ayant une chaîne polyalkylène glycol contenant de 2 à 300 molécules d'oxyalkylène, les copolymères maléate ayant une chaîne polyalkylène glycol contenant de 2 à 300 molécules d'oxyalkylène, plus préférentiellement les copolymères (méth)acrylate ayant une chaîne polyalkylène glycol contenant de 2 à 300 molécules d'oxyalkylène en C₂-C₃.

A titre de polyoxyalkylène phosphonates, utilisés en tant qu'agents dispersants selon l'invention, on peut citer préférentielllement les polyoxyéthylène di-phosphonates.

L'introduction d'épaississants dans les suspensions aqueuses pour permettre l'ajustement de leur viscosité est connu de l'état de la technique. Ainsi, les suspensions aqueuses d'hydroxyde d'étain, et/ou d'hydroxyde de fer et/ou d'hydroxyde de manganèse peuvent éventuellement comprendre un agent épaississant permettant un ajustement de la viscosité.

A titre d'agent épaississant, on peut citer les polymères hydrosolubles de masse molaire supérieure à 10⁶ g/mol.

A titre d'exemple d'agents épaississants, on peut citer par exemple les gommes xanthane, welan, caroube, guar, les celluloses et leurs dérivés ou les polyéthylènes, les polyacrylates et leurs dérivés de masse molaire supérieure à 10⁶ g/mol.

Ainsi une suspension aqueuse d'hydroxyde d'étain, et/ou d'hydroxyde de fer et/ou d'hydroxyde de manganèse de pH compris entre 2 et 11, bornes exclues, capable de réduire la teneur en chrome VI du ciment, présente bien cumulativement les critères suivants :
- une grande stabilité, même en solution concentrée,
- une viscosité des suspensions constante dans le temps et qui reste faible,
- une viscosité en solution concentrée suffisamment faible de façon à faciliter leur emploi, et
- un conditionnement à un pH compris entre 2 et 11, bornes exclues, pour faciliter les stockages, les transports et les conditions de mise en oeuvre, et de préférence un conditionnement répondant aux normes d'hygiène et de sécurité auxquelles sont confrontées les cimentiers, en particulier à l'égard des aspects liés au caractère corrosif des produits à pH proche de 1.

Dès lors, les suspensions aqueuses d'hydroxyde d'étain, et/ou d'hydroxyde de fer et/ou d'hydroxyde de manganèse de pH compris entre 2 et 11, bornes exclues, destinées à réduire la teneur en chrome VI du ciment selon l'invention peuvent être utilisées pour produire des ciments dont la teneur en chrome VI est au plus égale à 2 ppm.

Le procédé de traitement des ciments mettant en oeuvre les suspensions aqueuses d'hydroxyde d'étain de pH compris entre 2 et 11, bornes exclues, selon l'invention est réalisé au cours de l'étape de fabrication du ciment en cimenterie. Ce procédé de traitement consiste en ce que l'on introduit après l'étape de calcination du clinker lors du procédé de fabrication du ciment, une suspension aqueuse d'hydroxyde d'étain, et/ou d'hydroxyde de fer et/ou d'hydroxyde de manganèse ayant un pH compris entre 2 et 11, bornes exclues, de l'invention pour réduire la teneur en chrome VI des ciments à une valeur au plus égale à 2 ppm et ainsi obtenir des ciments dont la teneur en chrome VI est au plus égale à 2 ppm.

### EXEMPLE 1 :

Une suspension d'hydroxyde d'étain est préparée à partir d'une source d'étain qui peut être du chlorure d'étain ou du sulfate d'étain selon le protocole suivant qui comporte :
- la définition des proportions entre un agent alcalin qui est une solution aqueuse d'hydroxyde de sodium (NaOH-N) et la source d'étain pour transformer cette source d'étain en hydroxyde d'étain [Sn (OH) ₂] ;
- l'introduction de la source d'étain dans la solution aqueuse d'hydroxyde de sodium d'une manière lente et régulière, afin d'éviter la dismutation de l'étain.

On observe dès lors :
- l'apparition d'un précipité blanc-jaune de Sn(OH)₂ ;
- un phénomène de décantation rapide du Sn (OH)₂ précipité révélant qu'une suspension aqueuse dudit Sn (OH)₂ ne peut être stable.

Pour créer une suspension stable d'hydroxyde d'étain dans son milieu aqueux de précipitation, on met en oeuvre un agent dispersant à partir d'une suspension d'hydroxyde d'étain concentrée à 30% rapportée à la quantité d'eau.

Trois essais ont été faits avec trois agents dispersants ci-après énoncées :
- 1^{ier} essai : l'agent dispersant est le polynaphtalène sulfonate ;
- 2^{éme} essai : l'agent dispersant est le polyoxyéthylène di-phosphonate ;
- 3^{ème} essai : l'agent dispersant est un polycarboxylate de polyoxyéthylène.

Dans chaque essai, la concentration en agent dispersant est de 2% en poids par rapport à la suspension d'hydroxyde d'étain à 30% de concentration.

Dans les trois essais ainsi réalisés, la suspension d'hydroxyde d'étain en résultant manifeste une certaine stabilité puisqu'elle se présente sous un aspect laiteux ; toutefois un début de décantation peut se manifester au-delà de plusieurs heures de repos.

Ces trois suspensions d'hydroxyde d'étain ont alors été traitées par un agent épaississant :
- le premier essai a reçu de la gomme de Xanthane à raison de 0,4% en poids par rapport à la suspension d'hydroxyde de sodium. Après ce traitement, le pH de la suspension traitée est de 2,5 ;
- les essais 2 et 3 ont reçu un mélange de gomme de Xanthane et de polyoxyéthylène de haute masse molaire à raison de 2% en poids dans de l'eau. Après traitement, le pH de la suspension traitée est de 2,5.

Ces trois suspensions de Sn (OH)₂, contenant l'agent dispersant et un agent épaississant, ont révélé une excellente stabilité dans le temps : aucune décantation n'est visible après plusieurs jours de repos.

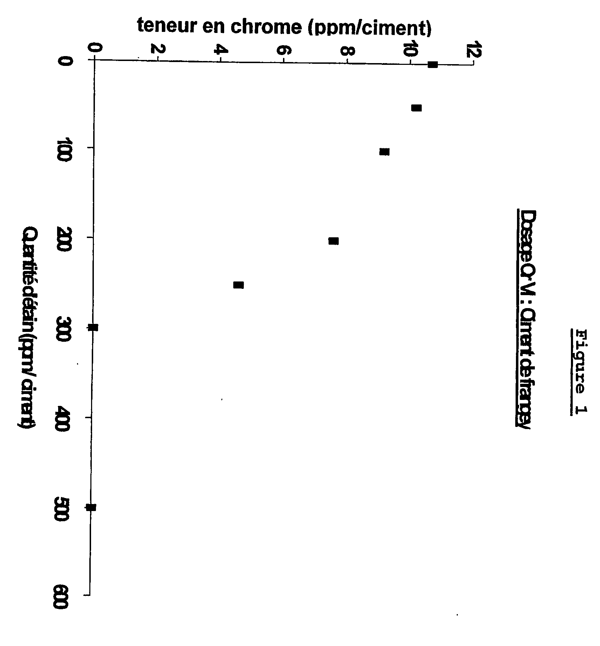

L'utilisation de telles suspensions de Sn (OH)₂ à différentes concentrations permet de réduire de manière significative la concentration en chrome VI dans les ciments.
Les filtrats issus de suspensions de ciment broyé d'une part sans additif et broyé d'autre part en faisant croître la concentration stanneuse ont été analysés par ICP (Inductively Coupled Plasma) après hydratation dans l'eau. Le dosage du chrome total est obtenu par cette technique c'est-à-dire le cumul des ions chrome (VI) et des ions chrome (III), ces derniers étant très peu solubles dans l'eau. Les résultats obtenus sont présentés par la figure 1.

Le ciment non traité présente 10,5 ppm d'ions Chrome VI.
Après traitement du ciment par la suspension de Sn(OH)₂ selon l'invention à raison d' au moins 300 ppm de Sn²⁺, la teneur en chrome VI du ciment est strictement inférieure à 2 ppm.

### EXEMPLE 2 :

Une suspension d'hydroxyde d'étain est préparée à partir d'une source d'étain qui peut être du chlorure d'étain ou du sulfate d'étain selon le protocole qui comporte les étapes suivantes:
- la définition des proportions entre un agent alcalin qui est une solution aqueuse d'hydroxyde de sodium (NaOH-N) et la source d'étain pour transformer cette source d'étain en hydroxyde d'étain [Sn (OH) ₂] et obtenir une suspension aqueuse d'hydroxyde d'étain chargée à 15% en poids dudit hydroxyde,
- l'introduction de la source d'étain dans la solution aqueuse d'hydroxyde de sodium d'une manière lente et régulière, afin d'éviter la dismutation de l'étain,
- l'apparition d'un précipité blanc-jaune de Sn(OH)₂ ;
- l'apparition d'un phénomène de décantation rapide du Sn (OH)₂ précipité révélant qu'une suspension aqueuse dudit Sn (OH)₂ ne peut être stable dans l'état,
- la création d'une suspension stable d'hydroxyde d'étain dans son milieu aqueux de précipitation, par la mise en oeuvre d'un agent dispersant à partir d'une suspension d'hydroxyde d'étain concentrée à 15% rapportée à la quantité d'eau.

Six essais numérotés 4 à 9 ont été conduits avec :
- le même agent réducteur qui est l'hydroxyde d'étain en suspension dans l'eau
- trois types d'agents dispersants mis en oeuvre dans la suspension aqueuse d'hydroxyde d'étain
- trois types d'agents épaississants mis en oeuvre dans la suspension aqueuse d'hydroxyde d'étain
- des quantités de suspensions aqueuses d'hydroxyde d'étain exprimées en ppm qui peuvent être différentes selon les essais.

Ces six suspensions de Sn (OH)₂, contenant l'agent dispersant et un agent épaississant, ont révélé une excellente stabilité dans le temps : aucune décantation n'est visible après plusieurs jours de repos.

L'utilisation de telles suspensions de Sn (OH)₂ à différentes concentrations permet de réduire de manière drastique la concentration en chrome VI dans les ciments.

Les filtrats issus de suspensions de ciment broyé d'une part sans additif et broyé d'autre part en faisant croître la concentration stanneuse ont été analysés par ICP (Inductively Coupled Plasma) après hydratation dans l'eau. Le dosage du chrome total est obtenu par cette technique c'est-à-dire le cumul des ions chrome (VI) et des ions chrome (III), ces derniers étant très peu solubles dans l'eau. Les conditions opératoires des essais quatre à neuf et les résultats obtenus sont réunis dans le tableau 1 ci-après.

Le ciment non traité présente selon les essais quatre à neuf une quantité d'ions Chrome VI comprise entre 6 et 6,2 ppm.

Après traitement du ciment par les suspensions de Sn (OH)₂ selon l'invention à raison d'au moins 300 ppm de Sn²+ la teneur en chrome VI du ciment est comprise entre 0,1 et 0,2 ppm et dès lors strictement inférieure à 2 ppm.

**Tableau 1:**

| N° essai | Nature de l'agent réducteur mis en oeuvre dans la suspension | Nature du dispersant | Concentration du dispersant en % en poids | Nature de l'épaississant | Concentration de l'épaississant en % en poids | Stabilité suspension | Teneur Cr VI du ciment avant traitement en ppm | Quantité suspension introduite dans ciment en ppm | Teneur Cr VI du ciment après traitement en ppm |
|---|---|---|---|---|---|---|---|---|---|
| 4 | Hydroxyde d'étain à 15% | Polyaccrylate | 1.4 | Gomme Xanthane + Polyoxyéthylène | 2 % | Bonne | 6 | 3000 | 0.1 |
| 5 | Hydroxyde d'étain à 15% | Polyphosphonate | 1.4 | Gomme Xanthane + Polyoxyéthylène | 2 % | Bonne | 6 | 3000 | 0.2 |
| 6 | Hydroxyde d'étain à 15% | Polycarboxylate de polyoxyéthylène | 1.4 | Gomme Xanthane | 0.4 % | Très bonne | 6.2 | 3000 | 0.1 |
| 7 | Hydroxyde d'étain à | Polycarboxylate 15% de polyoxyéthylène | 1.4 | Gomme Guar Tylose | 0.3 % 0.2 % | Très bonne | 6.2 | 3000 | 0.1 |
| 8 | Hydroxyde d'étain à 15% | Polycarboxylate de polyoxyéthylène | 1.4 | Gomme Xanthane | 0.9 % | Très bonne | 6.1 | 2000 | 0.1 |
| 9 | Hydroxyde d'étain à 15% | Polycarboxylate de polyoxyéthylène | 1.4 | Gomme Xanthane | 0.4 % | Très bonne | 6.1 | 1500 | 0.2 |

| | | | | | | | | | |
|---|---|---|---|---|---|---|---|---|---|
| Ainsi le traitement du ciment selon l'invention apparaît particulièrement efficace puisque la teneur en Chrome VI après traitement qui est comprise entre 0,1 et 0,2 ppm apparaît être toujours très inférieure à la limite supérieure imposée de 2 ppm. | | | | | | | | | |

### Exemple 3 :

Des suspensions aqueuses d'hydroxyde d'étain, de fer et de manganèse ont été préparées à partir de sources de ces divers éléments qui peuvent être des sels tels que des chlorures, des sulfates et autres sels, en suivant le protocole de préparation comportant les étapes suivantes :
- la définition des proportions entre un agent alcalin qui est une solution aqueuse d'hydroxyde de sodium (NaOH-N) et la source d'étain, de fer, de manganèse pour transformer ces sources en hydroxyde d'étain, de fer et de manganèse ;
- l'introduction de la source d'étain, de fer et de manganèse dans la solution aqueuse d'hydroxyde de sodium d'une manière lente et régulière, afin d'éviter en particulier la dismutation de l'élément mis en oeuvre,
- l'apparition d'un précipité,
- l'apparition d'un phénomène de décantation rapide de l'hydroxyde précipité révélant que les suspensions aqueuses d'hydroxyde ne sont pas stables.

La création d'une suspension stable d'hydroxyde d'étain, de fer et de manganèse dans le milieu aqueux de précipitation, par la mise en oeuvre d'un agent dispersant à partir d'une suspension d'hydroxyde concentrée à 10%, 15% ou 20% rapportée à la quantité d'eau.

Trois essais numérotés 10, 11 et 12 ont été conduits avec:
- des agents réducteurs différents qui sont un mélange • d'hydroxyde d'étain et d'hydroxyde de fer, de l'hydroxyde de fer seul et de l'hydroxyde de manganèse seul,
- le même type d'agent dispersant,
- le même type d'agent épaississant,
- des quantités de suspensions aqueuses d'hydroxyde exprimées en ppm qui sont identiques pour ces trois essais.

Ces trois suspensions d'agents réducteurs du Cr VI contenant un agent dispersant et un agent épaississant, ont révélé une excellente stabilité dans le temps : aucune décantation n'est visible après plusieurs jours de repos.

L'utilisation de ces suspensions à différentes concentrations permet de réduire de manière significative la concentration en chrome VI dans les ciments.

Les filtrats issus de suspensions de ciment broyé d'une part sans additif et broyé d'autre part en présence de l'agent réducteur ont été analysés par ICP (Inductively Coupled Plasma) après hydratation dans l'eau. Le dosage du chrome total est obtenu par cette technique c'est-à-dire le cumul des ions chrome (VI) et des ions chrome (III), ces derniers étant très peu solubles dans l'eau. Les conditions opératoires des essais 10, 11 et 12 et les résultats obtenus sont présentés par le tableau 2 ci-après.

Le ciment, non traité présente selon les essais entre 6,1 et 6,2 ppm d'ions Chrome VI.

Après traitement du ciment par la suspension d'agents réducteurs selon l'invention, la teneur en chrome VI du ciment est comprise entre 0,1 et 1,2 ppm selon l'essai considéré et est dès lors, strictement inférieure à la limite supérieure fixée à 2 ppm à ne pas dépasser.

**Tableau 2:**

| N° essais | Nature de l'agent réducteur mis en oeuvre dans la suspension | Nature du dispersant | Concentration du dispersant en % en poids | Nature de l'épaississant | Concentration de l'épaississant en % en poids | Stabilité suspension | Teneur Cr VI du ciment avant traitement en ppm | Quantité suspension introduite dans ciment en ppm | Teneur Cr VI du ciment après traiteme en ppm |
|---|---|---|---|---|---|---|---|---|---|
| 10 | Hydroxyde d'étain à 10% Hydroxyde fer 20% | Polycarboxylate de polyoxyéthylène | 1.4 | Gomme Xanthane | 0.4 % | Bonne | 6.2 | 3000 | 0.1 |
| 11 | Hydroxyde de fer à 20% | Polycarboxylate de polyoxyéthylène | 1.4 | Gomme Xanthane | 0.4 % | Très bonne | 6.1 | 3000 | 0.1 |
| 12 | Hydroxyde de manganèse à 15% | Polycarboxylate de polyoxyéthylène | 1.4 | Gomme Xanthane | 0.4 % | Très bonne | 6.1 | 3000 | 1.2 |

| | | | | | | | | | |
|---|---|---|---|---|---|---|---|---|---|
| Ainsi le traitement du ciment selon l'invention apparaît particulièrement efficace puisque la teneur en Chrome VI après traitement qui est comprise entre 0,1 et 1,2 ppm apparaît être toujours inférieure à la limite supérieure imposée de 2 ppm. | | | | | | | | | |

## Revendications

1. Suspension aqueuse d'hydroxyde d'étain ayant un pH compris entre 2 et 11, bornes exclues, pour réduire la teneur en chrome VI du ciment à une valeur au plus égale à 2 ppm, **caractérisée en ce qu'**elle comprend de 0,5 à 80% en poids de matière sèche d'hydroxyde d'étain rapporté à la quantité d'eau et **en ce qu'**elle est stabilisée par un agent de stabilisation hydrosoluble.

2. Suspension aqueuse d'hydroxyde d'étain selon la revendication 1, **caractérisé en ce qu'**elle comprend de 5 à 70% en poids de matière sèche d'hydroxyde d'étain rapporté à la quantité d'eau.

3. Suspension aqueuse d'hydroxyde d'étain selon la revendication 2, comprenant de 10 à 60% en poids de matière sèche d'hydroxyde d'étain rapporté à la quantité d'eau.

4. Suspension aqueuse d'hydroxyde d'étain selon l'une quelconque des revendication 1 ou 3, **caractérisée en ce que** l'agent de stabilisation hydrosoluble est un agent dispersant de masse molaire inférieure à 100 000 g/mol.

5. Suspension aqueuse d'hydroxyde d'étain selon la revendication 4, **caractérisée en ce que** l'agent dispersant choisi dans le groupe constitué par les polynaphtalène sulfonates, les polyoxyalkylène di-phosphonates et les polycarboxylates polyoxyalkylène.

6. Suspension aqueuse d'hydroxyde d'étain selon la revendication 5, **caractérisée en ce que** l'agent dispersant est choisi parmi les polynaphtalène sulfonates.

7. Suspension aqueuse d'hydroxyde d'étain selon la revendication 5, **caractérisée en ce que** l'agent dispersant est choisi parmi les copolymères de type polycarboxylique obtenus par polymérisation d'un monomère de monoester de polyalkyléneglycol contenant de 2 à 300 molécules d'oxyalkylène avec au moins un monomère choisi parmi les acides monocarboxyliques insaturés et les acides dicarboxyliques insaturés.

8. Suspension aqueuse d'hydroxyde d'étain selon la revendication 7, **caractérisé en ce que** l'agent dispersant est choisi parmi les copolymères (méth)acrylate ayant une chaîne polyoxyalkylène polyalkylène glycol contenant de 2 à 300 molécules d'oxyalkylène.

9. Suspension aqueuse d'hydroxyde d'étain selon la revendication 5, **caractérisée en ce que** l'agent dispersant est choisi parmi les polyoxyalkylène di-phosphonates, et préférentiellement les polyoxyéthylène di-phosphonates.

10. Suspension aqueuse d'hydroxyde d'étain selon la revendication 1, **caractérisée en ce qu'**elle comprend en outre un agent d'ajustement de la viscosité de ladite suspension.

11. Suspension aqueuse d'hydroxyde d'étain selon la revendication 10, **caractérisée en ce que** l'agent d'ajustement de la viscosité est choisi parmi les polymères hydrosolubles de masse molaire supérieure à 10⁶ g/mol.

12. Suspension aqueuse d'hydroxyde d'étain selon la revendication 11, **caractérisée en ce que** l'agent d'ajustement de la viscosité est choisi dans le groupe constitué par les gommes xanthane, welan, caroube, guar, les celluloses et leurs dérivés.

13. Suspension aqueuse d'hydroxyde d'étain selon la revendication 11, **caractérisée en ce que** l'agent d'ajustement de la viscosité est un polymère hydrosoluble de masse molaire supérieure à 10⁶ g/mol choisi parmi les polyéthylènes, les polyacrylates et leurs dérivés.

14. Utilisation de suspensions aqueuses d'hydroxydes d'au moins un élément de transition et/ou d'étain dont le potentiel d'oxydo-réduction est inférieur à celui du couple CrO₄²⁻/Cr (OH)₃ (-0,12 V) ayant un pH compris entre 2 et 11, bornes exclues, pour réduire la teneur en chrome VI du ciment à une valeur au plus égale à 2 ppm, comprenant de 0,5 à 80% en poids de matière sèche d'hydroxyde d'au moins un élément de transition et/ou d'étain rapporté à la quantité d'eau et stabilisée par un agent de stabilisation hydrosoluble pour produire des ciments dont la teneur en chrome VI est au plus égale à 2 ppm.

15. Utilisation de suspensions aqueuses selon la revendication 14, dans laquelle la suspension est une suspension d'hydroxyde d'étain.

16. Procédé de traitement des ciments, **caractérisé en ce qu'**on introduit après l'étape de calcination du clinker lors du procédé de préparation du ciment une suspension aqueuse d'hydroxyde d'au moins un élément de transition et/ou d'étain dont le potentiel d'oxydo-réduction est inférieur à celui du couple CrO₄²⁻/Cr(OH)₃ (-0,12 V) ayant un pH compris entre 2 et 11, bornes exclues, pour réduire la teneur en chrome VI du ciment à une valeur au plus égale à 2 ppm, comprenant de 0,5 à 80% en poids de matière sèche d'hydroxyde d'au moins un élément de transition et/ou d'étain rapporté à la quantité d'eau et stabilisée par un agent de stabilisation hydrosoluble et que l'on obtient des ciments dont la teneur en chrome VI est au plus égale à 2 ppm.

17. Procédé de traitement des ciments selon la revendication 16, dans lequel la suspension d'hydroxyde est une suspension d'hydroxyde d'étain.

## Claims

1. Aqueous suspension of tin hydroxide having a pH of from 2 to 11, limits excluded, for reducing the chromium VI content of cement to a value of not more than 2 ppm, **characterised in that** it comprises from 0.5 to 80 % by weight of dry matter of tin hydroxide, based on the amount of water, and **in that** it is stabilised by a water-soluble stabilising agent.

2. Aqueous suspension of tin hydroxide according to claim 1, **characterised in that** it comprises from 5 to 70 % by weight of dry matter of tin hydroxide, based on the amount of water.

3. Aqueous suspension of tin hydroxide according to claim 2, comprising from 10 to 60 % by weight of dry matter of tin hydroxide, based on the amount of water.

4. Aqueous suspension of tin hydroxide according to any one of claims 1 to 3, **characterised in that** the water-soluble stabilising agent is a dispersing agent having a molar mass of less than 100,000 g/mol.

5. Aqueous suspension of tin hydroxide according to claim 4, **characterised in that** the dispersing agent is selected from the group constituted by polynaphthalene sulfonates, polyoxyalkylene diphosphonates and polyoxyalkylene polycarboxylates.

6. Aqueous suspension of tin hydroxide according to claim 5, **characterised in that** the dispersing agent is selected from polynaphthalene sulfonates.

7. Aqueous suspension of tin hydroxide according to claim 5, **characterised in that** the dispersing agent is selected from copolymers of the polycarboxylic type obtained by polymerisation of a polyalkylene glycol monoester monomer containing from 2 to 300 oxyalkylene molecules with at least one monomer selected from unsaturated monocarboxylic acids and unsaturated dicarboxylic acids.

8. Aqueous suspension of tin hydroxide according to claim 7, **characterised in that** the dispersing agent is selected from (meth)acrylate copolymers having a polyoxyalkylene polyalkylene glycol chain containing from 2 to 300 oxyalkylene molecules.

9. Aqueous suspension of tin hydroxide according to claim 5, **characterised in that** the dispersing agent is selected from polyoxyalkylene diphosphonates, preferably polyoxyethylene diphosphonates.

10. Aqueous suspension of tin hydroxide according to claim 1, **characterised in that** it further comprises an agent for adjusting the viscosity of said suspension.

11. Aqueous suspension of tin hydroxide according to claim 10, **characterised in that** the agent for adjusting the viscosity is selected from water-soluble polymers having a molar mass of more than 10⁶ g/mol.

12. Aqueous suspension of tin hydroxide according to claim 11, **characterised in that** the agent for adjusting the viscosity is selected from the group constituted by xanthan, welan, carob, guar gums, celluloses and their derivatives.

13. Aqueous suspension of tin hydroxide according to claim 11, **characterised in that** the agent for adjusting the viscosity is a water-soluble polymer having a molar mass of more than 10⁶ g/mol selected from polyethylenes, polyacrylates and their derivatives.

14. Use of aqueous suspensions of hydroxides of at least one transition element and/or of tin, the oxidation-reduction potential of which is less than that of the pair Cr0₄²⁻/Cr(OH)₃ (-0.12 V), having a pH of from 2 to 11, limits excluded, for reducing the chromium VI content of cement to a value of not more than 2 ppm, comprising from 0.5 to 80 % by weight of dry matter of hydroxide of at least one transition element and/or of tin, based on the amount of water, and stabilised by a water-soluble stabilising agent, in the production of cements in which the chromium VI content is not more than 2 ppm.

15. Use of aqueous suspensions according to claim 14, in which the suspension is a suspension of tin hydroxide.

16. Method for treating cements, **characterised in that** there is introduced, after the step of calcination of the clinker during the cement production process, an aqueous suspension of hydroxide of at least one transition element and/or of tin, the oxidation-reduction potential of which is less than or equal to that of the pair CrO₄²⁻ /Cr(OH)₃ (-0.12 V), having a pH of from 2 to 11, limits excluded, for reducing the chromium VI content of cement to a value of not more than 2 ppm, comprising from 0.5 to 80 % by weight of dry matter of hydroxide of at least one transition element and/or of tin, based on the amount of water, and stabilised by a water-soluble stabilising agent, and **in that** cements in which the chromium VI content is not more than 2 ppm are obtained.

17. Method for treating cements according to claim 16, in which the hydroxide suspension is a suspension of tin hydroxide.

## Patentansprüche

1. Wässrige Zinnhydroxidsuspension mit einem pH-Wert zwischen 2 und 11 ausschließlich zum Reduzieren des Gehalts an Chrom (VI) in Zement auf einen Wert von gleich oder größer als 2 ppm, **dadurch gekennzeichnet, dass** sie 0,5 bis 80 Gew.-% Zinnhydroxidtrockenmasse bezogen auf die Wassermenge enthält, und dadurch, dass sie durch ein wasserlösliches Stabilisationsmittel stabilisiert wird.

2. Wässrige Zinnhydroxidsuspension nach Anspruch 1, **dadurch gekennzeichnet, dass** sie 5 bis 70 Gew.-% Zinnhydroxidtrockenmasse bezogen auf die Wassermenge enthält.

3. Wässrige Zinnhydroxidsuspension nach Anspruch 2, die 10 bis 60 Gew.-% Zinnhydroxidtrockenmasse bezogen auf die Wassermenge enthält.

4. Wässrige Zinnhydroxidsuspension nach Anspruch 1 oder 3, **dadurch gekennzeichnet, dass** das wasserlösliche Stabilisationsmittel ein Dispersionsmittel mit einer Molmasse von weniger als 100.000 g/mol ist.

5. Wässrige Zinnhydroxidsuspension nach Anspruch 4, **dadurch gekennzeichnet, dass** das Dispersionsmittel ausgewählt ist aus der Gruppe bestehend aus Polynaphthalensulfonaten, Polyoxyalkylen-Diphosphonaten und Polyoxyalkylen-Polycarboxylaten.

6. Wässrige Zinnhydroxidsuspension nach Anspruch 5, **dadurch gekennzeichnet, dass** das Dispersionsmittel aus Polynaphthalensulfonaten ausgewählt ist.

7. Wässrige Zinnhydroxidsuspension nach Anspruch 5, **dadurch gekennzeichnet, dass** das Dispersionsmittel ausgewählt ist aus den Copolymeren des polycarboxylischen Typs, die durch Polymerisation eines Monomers von Polyalkylenglykolmonoester erhalten werden, das 2 bis 300 Oxyalkylenmoleküle mit wenigstens einem Monomer enthält, das aus ungesättigten Monocarbonsäuren und ungesättigten Dicarbonsäuren ausgewählt ist.

8. Wässrige Zinnhydroxidsuspension nach Anspruch 7, **dadurch gekennzeichnet, dass** das Dispersionsmittel ausgewählt ist aus (Meth)acrylat-Copolymeren mit einer Polyoxyalkylen-Polyalkylenglykolkette, die 2 bis 300 Oxyalkylenmoleküle enthält.

9. Wässrige Zinnhydroxidsuspension nach Anspruch 5, **dadurch gekennzeichnet, dass** das Dispersionsmittel ausgewählt ist aus Polyoxyalkylen-Diphosphonaten und vorzugsweise Polyoxyethylen-Diphosphonaten.

10. Wässrige Zinnhydroxidsuspension nach Anspruch 1, **dadurch gekennzeichnet, dass** sie darüber hinaus ein Mittel zum Einstellen der Viskosität der genannten Suspension enthält.

11. Wässrige Zinnhydroxidsuspension nach Anspruch 10, **dadurch gekennzeichnet, dass** das Mittel zum Einstellen der Viskosität ausgewählt ist aus wasserlöslichen Polymeren mit einer Molmasse von mehr als 10⁶ g/mol.

12. Wässrige Zinnhydroxidsuspension nach Anspruch 11, **dadurch gekennzeichnet, dass** das Mittel zum Einstellen der Viskosität ausgewählt ist aus einer Gruppe bestehend aus Xanthangummi, Welan-Gum, Johannisbrotgummi, Guar-Gum, Cellulosen und deren Derivaten.

13. Wässrige Zinnhydroxidsuspension nach Anspruch 11, **dadurch gekennzeichnet, dass** das Mittel zum Einstellen der Viskosität ein wasserlösliches Polymer mit einer Molmasse von mehr als 10⁶ g/mol ist, ausgewählt aus Polyethylenen, Polyacrylaten und deren Derivaten.

14. Verwendung von wässrigen Hydroxidsuspensionen von wenigstens einem Übergangselement und/oder von Zinn, deren Sauerstoffreduktionspotential kleiner ist als das des Paares CrO₄²⁻/Cr (OH)₃ (-0,12 V) mit einem pH-Wert zwischen 2 und 11, ausschließlich, um den Gehalt an Chrom (VI) von Zement auf einen Wert von gleich oder größer als 2 ppm zu reduzieren, umfassend 0,5 bis 80 Gew.-% Hydroxidtrockenmasse von wenigstens einem Übergangselement und/oder von Zinn bezogen auf die Wassermenge und stabilisiert mit einem wasserlöslichen Stabilisationsmittel, um Zemente zu produzieren, deren Gehalt an Chrom VI gleich oder größer als 2 ppm ist.

15. Verwendung von wässrigen Suspensionen nach Anspruch 14, wobei die Suspension eine Zinnhydroxidsuspension ist.

16. Verfahren zum Behandeln von Zementen, **dadurch gekennzeichnet, dass** nach der Kalzinierungsstufe des Klinkers bei der Herstellung des Zements eine wässrige Hydroxidsuspension von wenigstens einem Übergangselement und/oder von Zinn eingeleitet wird, deren Sauerstoffreduktionspotential kleiner ist als das des Paares CrO₄²⁻/Cr (OH)₃ (-0,12 V) mit einem pH-Wert zwischen 2 und 11, ausschließlich, um den Gehalt an Chrom (VI) des Zements auf einen Wert von gleich oder größer als 2 ppm zu reduzieren, umfassend 0,5 bis 80 Gew.-% Hydroxidtrockenmasse von wenigstens einem Übergangselement und/oder von Zinn bezogen auf die Wassermenge und stabilisiert mit einem wasserlöslichen Stabilisationsmittel, und dass Zemente erhalten werden, deren Gehalt an Chrom (VI) gleich oder größer als 2 ppm ist.

17. Verfahren zum Behandeln von Zementen nach Anspruch 16, wobei die Hydroxidsuspension eine Zinnhydroxidsuspension ist.
